# EUROPÄISCHE PATENTANMELDUNG

(11) **EP 0 632 211 A1**
(43) Veröffentlichungstag der Anmeldung: **04.01.1995**
(21) Anmeldenummer: 94109673.7
(22) Anmeldetag: 23.06.1994
(51) Int. Cl.: F16F 3/08, F16F 1/36

(54) **Elastisches Lager**

(30) Priorität: 02.07.1993 DE 4322126
(71) Anmelder: METZELER GIMETALL AG, D-80992 München (DE)
(72) Erfinder: Bitschkus, Horst, D-56206 Hilgert (DE); Schulze, Carsten, D-38444 Wolfsburg (DE)
(74) Vertreter: Preissner, Nicolaus, Dipl.-Ing.

(57) **Zusammenfassung**

Bei einem elastischen Lager, insbesondere zur Abstützung von Antriebsaggregaten in Kraftfahrzeugen, mit einem vom Antriebsaggregat seitlich abragenden Tragarm, der sich über Elastomerkörper an einem starren Widerlager abstützt, ist zur einfacheren Einstellung der Federsteifigkeit der Elastomerkörper und zur Gewährleistung einer Recyclingfähigkeit erfindungsgemäß vorgesehen, daß der Tragarm (1) angenähert kreuzförmigen Querschnitt mit seitlich schräg abragenden Stegen (4-7) aufweist, daß zwischen den Stegen (4-7) längliche und prismatischen Querschnitt aufweisende und von einem fortlaufenden Extrudat abgeschnittene Gummikörper (10, 13-15) zur vertikalen und horizontalen Abstützung eingesetzt sind, die von einem motorseitig hin offenen und am Widerlager (25) befestigten Gehäuse (20) umschlossen sind.

## Beschreibung

Die Erfindung bezieht sich auf ein elastisches Lager, insbesondere zur Abstützung von Antriebsaggregaten in Kraftfahrzeugen, mit einem vom Antriebsaggregat seitlich abragenden Tragarm, der sich über Elastomerkörper an einem starren Widerlager abstützt.

Derartige Motorlager sind als sog. Keillager bekannt, bei denen zwei schräg zueinanderstehende Gummikörper zwischen einem oberen und einem unteren - meist metallischen - Träger einvulkanisiert sind. Abgesehen von einer geringen Variationsmöglichkeit der Federsteifigkeit weisen derartige Lager den heute wesentlichen Nachteil auf, daß sie praktisch nicht oder nur mit hohem Aufwand recyclefähig sind, da sich das Metall nur schwer vom Gummi trennen läßt.

Der vorliegenden Erfindung liegt daher die Aufgabe zugrunde, ein elastisches Lager zu schaffen, bei dem sich mit einfachen Mitteln die Federsteifigkeit über weite Bereiche leicht und mit großen Variationsmöglichkeiten einstellen läßt und das darüberhinaus eine optimale Recyclingfähigkeit aufweist.

Zur Lösung dieser Aufgabe ist erfindungsgemäß vorgesehen, daß der Tragarm angenähert kreuzförmigen Querschnitt mit seitlich schräg abragenden Stegen aufweist, daß zwischen den Stegen längliche und prismatischen Querschnitt aufweisende und von einem fortlaufenden Extrudat abgeschnittene Gummikörper zur vertikalen und horizontalen Abstützung eingesetzt sind, die von einem motorseitig hin offenen und am Widerlager befestigten Gehäuse umschlossen sind.

Damit werden zur federnden Abstützung und als Anschläge Gummikörper verwendet, die aus gesondert extrudierten, fortlaufenden Profilsträngen abgeschnitten und in die entprechende Halterung eingesetzt sind, aus denen sie ebenso leicht entfernt und recycelt werden können.

Zur gezielten Einstellung der Federsteifigkeit weisen die Gummikörper zweckmäßigerweise durchgehende Längskanäle auf.

Dabei ist es möglich, daß die Längskanäle kreisförmigen Querschnitt mit über ihre Länge mindestens einer venturiartigen Verengung aufweisen.

Ferner ist es möglich, daß die Längskanäle unterschiedlichen Durchmesser aufweisen.

Bezüglich der Ausbildung des Tragarmes ist es zweckmäßig, wenn dieser einen horizontalen Mittelsteg mit seitlich unter einem Winkel von 30 bis 60° zur Horizontalen abragenden Stegen aufweist und daß der Mittelsteg an einem Ende in einen breiteren Halteflansch zum Anschluß des Motors übergeht.

Dabei kann sich der Tragarm auf einem sich unmittelbar am Widerlager abstützenden Gummi-Tragkörper mit rechteckigem Querschitt und einer keilförmig zulaufenden, zwischen den seitlich nach unten abragenden Stegen eingesetzten Oberseite aufliegen.

Dieser Gummi-Tragkörper kann neben längs verlaufenden Kanälen auch noch eine zentrale, vertikale Ausnehmung aufweisen.

Zur einfacheren Herstellung ist es zweckmäßig, wenn die beiden seitlichen Gummikörper als Horizontalanschläge gleichen Querschnitt aufweisen und die schräg abragenden Stege seitlich überragen und mit seitlichen Ansätzen an der umschließenden Gehäuseinnenwand anliegen.

Der obere Gummikörper ist zweckmäßigerweise als Vertikalanschlag ausgebildet und überragt die schräg nach oben abragenden Stege mit mindestens einem Ansatz.

Zur weiteren Vereinfachung können auch die jeweils einander gegenüberliegenden Gummikörper den gleichen Querschnitt aufweisen und spiegelsymmetrisch zueinander eingesetzt sein.

Zur Einsparung eines gesonderten oberen Vertikalanschlages ist es auch möglich, daß die beiden seitlichen Gummikörper je einen, den schräg nach oben ragenden Steg umfassenden Ansatz als Vertikalanschlag aufweisen.

In weiterer Ausgestaltung können die beiden schräg nach unten abragenden Stege zunächst schräg nach innen und anschließend schräg nach außen gerichtet sein und im oberen Bereich eine schwalbenschwanzförmige Einziehung für den unteren Gummi-Tragkörper bilden.

Es ist aber auch möglich, daß der Tragarm einen horizontalen Mittelsteg mit einer sich längserstreckenden, schwalbenschwanzförmigen Einziehung und zwei seitlich nach unten abragenden Stege zum Einschluß des abstützenden Gummi-Tragkörpers aufweist und daß das umschließende Gehäuse an den Seitenwänden mit je einer schwalbenschwanzförmigen Auswölbung versehen ist, wobei in die schwalbenschwanzförmige Einziehung bzw. die seitlichen Auswölbungen identische Profilstränge als Vertikalanschlag bzw. Horizontalanschläge eingesetzt sind.

Dabei können diese Profilstränge angenähert halbkreisförmigen Querschnitt mit durchgehenden Längskanälen und seitlichen Einziehungen sowie einen mittigen Schwalbenschwanzfuß aufweisen.

Zur besseren Halterung der Gumikörper ist es zweckmäßig, wenn die seitlich schräg abragenden Stege längsverlaufende, angenähert pfeilförmig zulaufende Ansätze aufweisen, die in entsprechende Hinterschneidungen des Gummikörpers eingreifen.

Dabei können dann die Gummikörper zwischen den abragenden Stegen eingeklipst sein.

Gegebenenfalls ist es aber auch möglich, die Gummikörper selbst zwischen den Stegen zu haften.

Zur Aufnahme vertikaler Kräfte kann der Tragarm zwischen den beiden schräg nach oben abragenden Stegen eine querverlaufende Zwischenwandung aufweisen, die bündig mit der Oberkante der Stege abschließt.

Darüberhinaus bezieht sich die Erfindung auf ein Verfahren zur Herstellung von elastischen Gummikörpern für ein elastisches Lager zur Abstützung von Antriebsaggregaten, wobei erfindungsgemäß vorgesehen ist, daß die Gummikörper mit vorgegebenem Querschnitt als fortlaufende Profilstränge aus einem Elastomer extrudiert, ausvulkanisiert und anschließend auf vorgegebene Länge der einzelnen Gummikörper abgetrennt werden.

Anhand einer schematischen Zeichnung sind Aufbau und Funktionsweise von Ausführungsbeispielen nach der Erfindung näher erläutert. Dabei zeigen:
- Fig. 1: einen Längsschnitt durch ein elastisches Lager mit angenähert kreuzförmigem Tragarm;
- Fig. 2: die Seitenansicht des Lagers nach Fig. 1;
- Fig. 3: die Aufsicht auf das Lager nach Fig. 1;
- Fig. 4: das das Lager umschließende Gehäuse in perspektivischer Ansicht;
- Fig. 5: eine perspektivische Darstellung des kreuzförmigen Tragarms;
- Fig. 6: einen Längsschnitt durch ein Lager abgewandelter Ausgestaltung;
- Fig. 7: die perspektivische Ansicht eines Lagers mit spiegelsymmetrisch gleichen Gummikörpern;
- Fig. 8: die Gestaltung eines Lagers mit im Gehäuse eingesetzten Horizontalanschlägen;
- Fig. 9: die perspektivische Ansicht der bei dem Lager nach Fig. 8 verwendeten Gummikörper und
- Fig. 10: zwei hälftige Lagervarianten, bei denen Horizontal- und Vertikalanschläge einstückig ausgebildet sind.

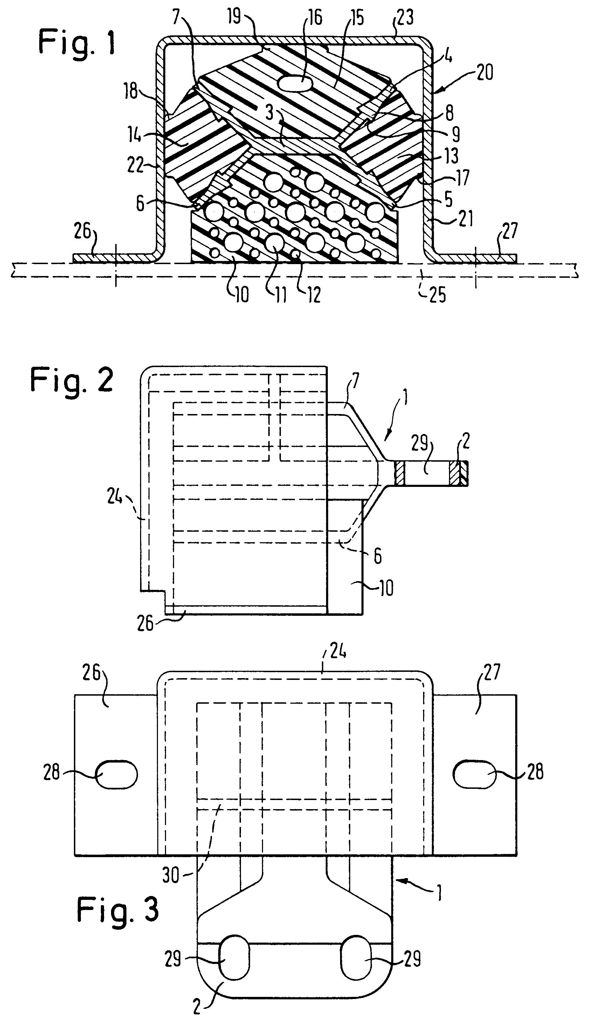

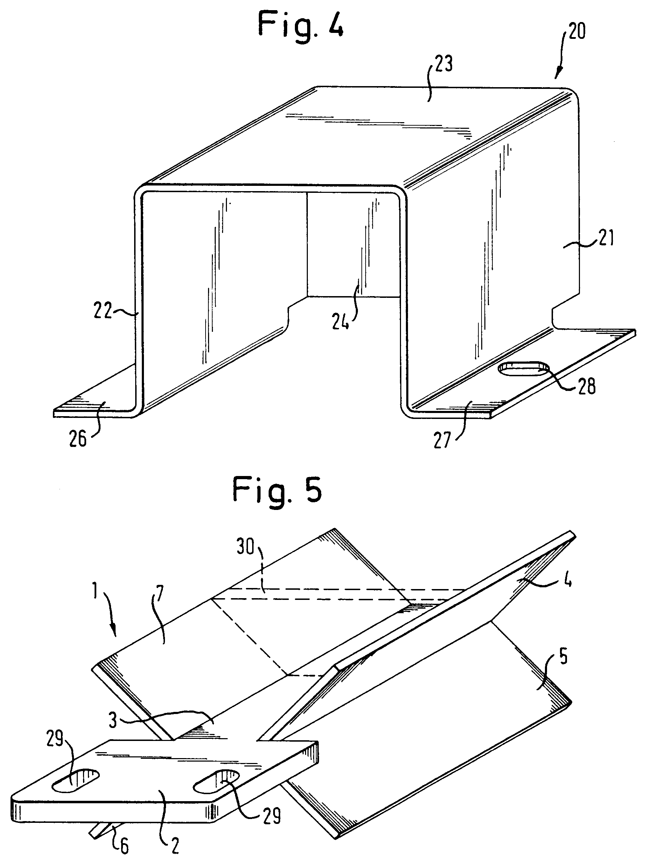

Wie man aus den verschiedenen Ansichten nach den Fig. 1 bis 3 ersieht, weist das Lager zunächst einen zentralen Tragarm 1 auf, der über einen horizontalen Flansch 2 an einem Ende an dem nicht näher dargestellten, abzustützenden Motor eines Kraftfahrzeuges angeschraubt ist und der im Anschluß an diesen Flansch 2 angenähert kreuzförmig mit einem horizontalen Mittelsteg 3 und seitlich davon abragenden Stegen 4, 5, 6 und 7 ausgebildet ist, wie das im einzelnen auch aus der perspektivischen Ansicht nach Fig. 5 ersichtlich ist. Diese seitlichen Stege 4, 5, 6 und 7 können unter einem Winkel von 30 bis 60° zur Horizontalen abragen, wobei sich ein Winkel von 45° als besonders zweckmäßig erwiesen hat.

Zwischen den beiden unteren Stegen 5 und 6 ist nunmehr ein die Hauptabstützung übernehmender Gummi-Tragkörper 10 eingesetzt, der im wesentlichen einen rechteckigen Querschnitt mit einer keilförmig zulaufenden, zwischen den seitlich nach unten abragenden Stegen 5 und 6 eingesetzten Oberseite aufweist. Dieser Gummi-Tragkörper 10 weist nach dem dargestellten Ausführungsbeispiel durchlaufende Längskanäle 11 und 12 auf, die gleichen oder unterschiedlichen Durchmesser aufweisen können. Darüberhinaus ist es auch möglich, daß diese Kanäle 11 bzw. 12 über ihre Länge mit einer oder mehreren venturiartigen Verengungen, die nicht näher dargestellt sind, versehen sind, um damit ein besseres Übertragungsverhalten für Körperschalldämmung zu gewährleisten. Durch die Variation von Anzahl und/oder Durchmesser dieser Kanäle 11 und 12 kann dabei die Federsteifigkeit des Gummi-Tragkörpers 10 gezielt eingestellt werden.

Zwischen den seitlichen Stegen 4 und 5 bzw. 6 und 7 sind weitere Gummikörper 13 und 14 eingesetzt, die identischen Querschnitt aufweisen und als Horizontalanschläge dienen. Auch diese Gummikörper 13 und 14 können mit Längskanälen entsprechend den Kanälen 11 und 12 versehen sein.

Auf der Oberseite zwischen den nach oben abragenden Stegen 4 und 7 ist ein weiterer Gummikörper 15 eingesetzt, der als Vertikalanschlag nach oben dient. Bei dem hier dargestellten Ausführungsbeispiel weist dieser Gummikörper 15 lediglich einen Längskanal 16 mit elliptischem Querschnitt auf, wobei jedoch auch hier mehrere und anders gestaltete Längskanäle möglich sind.

Diese Konfiguration aus kreuzförmigem Tragarm 1 und den vier Gummikörpern 10, 13, 14 und 15 ist nunmehr von einem zur Motorseite hin offenen Gehäuse 20 umschlossen, das in perspektivischer Ansicht nochmals gesondert in Fig. 4 dargestellt ist. Dieses Gehäuse 20 mit den Seitenwänden 21 und 22 sowie der Oberseite 23 und der geschlossenen Rückwand 24 ist auf einem nur gestrichelt dargestellten Längsträger 25 des Kraftfahrzeuges angeschraubt, auf dem direkt auch der Gummi-Tragkörper 10 aufruht und sich abstützt.

Wie man in Zusammenschau mit Fig. 1 ersieht, stützen sich die beiden seitlichen Gummikörper 13 und 14 mit ihren Ansätzen 17 und 18 an den Seitenwänden 21 und 22 und der Vertikalanschlag 15 mit seinem Ansatz 19 an der Oberseite 23 des Gehäuses 20 ab.

Wesentlich für die Gestaltung dieses Lagers ist die Herstellung der Gummikörper 10, 13, 14 und 15. Diese werden entsprechend dem jeweils gewünschten Querschnitt als endlose Profilstränge fortlaufend aus einem Elastomer extrudiert, wobei gleichzeitig die Längskanäle durch entsprechende Einsätze im Extrudermundstück ausgeformt werden. Anschließend werden diese extrudierten Elastomerstränge vulkanisiert und können dann auf die Länge der einzelnen Gummikörper entsprechend abgeschnitten werden.

Die so hergestellten Gummikörper werden zwischen den Stegen 4, 5, 6 und 7 des Tragarms 1 einfach eingeklipst, da die einzelnen Stege mit längsverlaufenden, angenähert pfeilförmig zulaufenden Ansätzen 8 versehen sind, die in entsprechende Hinterschneidungen 9 der Gummikörper 10, 13, 14 und 15 eingreifen und damit einen Halt gegen seitliches Herausfallen bieten.

Damit können diese Gummikörper nach Ablauf der Einsatzzeit des Lagers oder bei eventuellen Schäden leicht aus dem Tragarm wieder entfernt und ausgewechselt oder recycelt werden.

In Fig. 4 ist noch einmal in perspektivischer Ansicht das Gehäuse 20 mit Seitenwänden 21 und 22, Oberseite 23 und geschlossener Rückwand 24 gezeigt, das mit den seitlich abragenden Flanschen 26 und 27 über entsprechende Langlöcher 28 am Fahrzeuglängsträger 25 festgelegt ist und damit eine Begrenzung der Lagerbewegungen in horizontaler und in vertikaler Richtung bewirkt.

Fig. 5 zeigt noch einmal die perspektivische Ansicht einer möglichen Ausgestaltung des Tragarmes 1, von dessem horizontalen Mittelsteg 3 die seitlich schräg abragenden Stege 4, 5 und 7 sowie der verdeckt liegende Steg 6 abragen. Wie man insbesondere aus der Zusammenschau mit Fig. 2 ersieht, ist der angenähert kreuzförmige Teil des Tragarmes 1 länger als die Tiefe des Gehäuses 20 und ragt dabei nach vorn auf der offenen Seite heraus, um hier dann in den verbreiterten Flansch 2 mit den entsprechenden Befestigungslöchern 29 zur Festlegung am Motor überzugehen.

Die kreuzförmig abragenden Stege 4, 5, 6 und 7 sind dabei in ihrer Gesamtbreite etwas schmaler als der lichte Innenraum des Gehäuses 20, da die Stege selbst von den entsprechenden Gummikörpern 10, 13, 14 und 15 seitlich überragt werden, um damit eine federnde Abstützung gegenüber dem Gehäuse 20 zu bewirken.

Zusätzlich kann zwischen den beiden oberen Stegen 4 und 7 noch eine die Oberkante dieser Stege überragende querverlaufende Zwischenwandung 30 vorgesehen sein, die mit der Oberkante der Stege 4 und 7 abschließt, um damit zusätzlich vertikale Kräfte aufzunehmen.

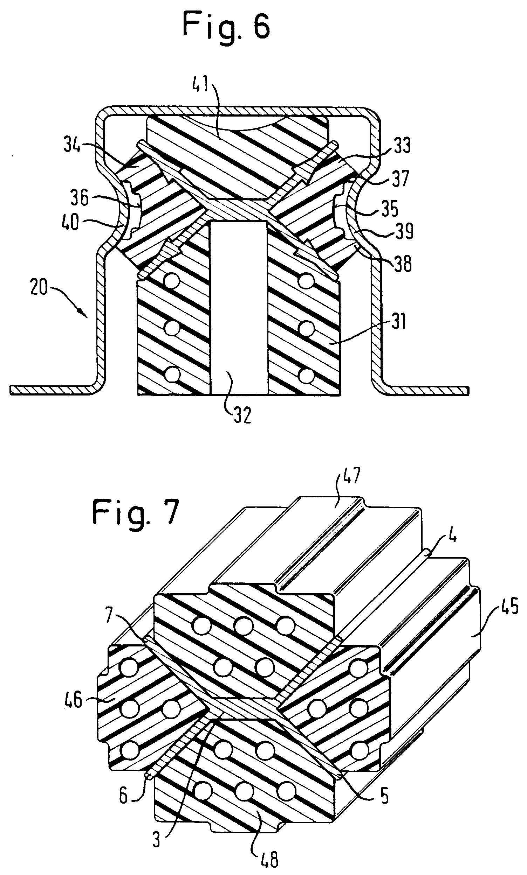

In Fig. 6 ist eine weitere Gestaltungsmöglichkeit eines solchen Lagers dargestellt. Dieses Lager baut insgesamt etwas höher, wobei der untere Gummi-Tragkörper 31 eine zentrale, vertikale Ausnehmung 32 mit quadratischem oder kreisförmigem Querschnitt aufweist, um hierdurch eine weichere Federkennlinie zu erhalten. Auch die hier dargestellten Horizontalanschläge 33 und 34 weisen im Gegensatz zu der Ausgestaltung nach Fig. 1 seitliche Einziehungen 35 und 36 auf, wobei sich die begrenzenden Vorsprünge 37 und 38 gegen entsprechende Einziehungen 39 und 40 am Gehäuse 20 abstützen. Mit einer solchen Gestaltung, die bezüglich der Gummikörper auch beim oberen Vertikalanschlag 41 verwirklicht ist, ist ebenfalls eine progressive Kennlinie bei einem entsprechenden Inwirkungtreten der Anschläge gewährleistet.

Fig. 7 zeigt eine weitere Gestaltungsmöglichkeit, bei der der Federkörper ohne äußeres Gehäuse dargestellt ist. Dabei weisen die einander gegenüberliegenden Gummikörper 45 und 46 bzw. 47 und 48 jeweils gleichen Querschnitt und gleiche Konfiguration auf, wodurch sich die Herstellung und insbesondere die Lagerhaltung erheblich vereinfachen. Gegebenenfalls kann dabei der Mittelsteg 3 des Tragarmes soweit verschmälert werden oder die Übergangskonturen zwischen den einzelnen abragenden Stegen 4, 5, 6 und 7 soweit abgerundet werden, daß für die Gesamtfeder Gummikörper einheitlicher Gestaltung verwendet werden können.

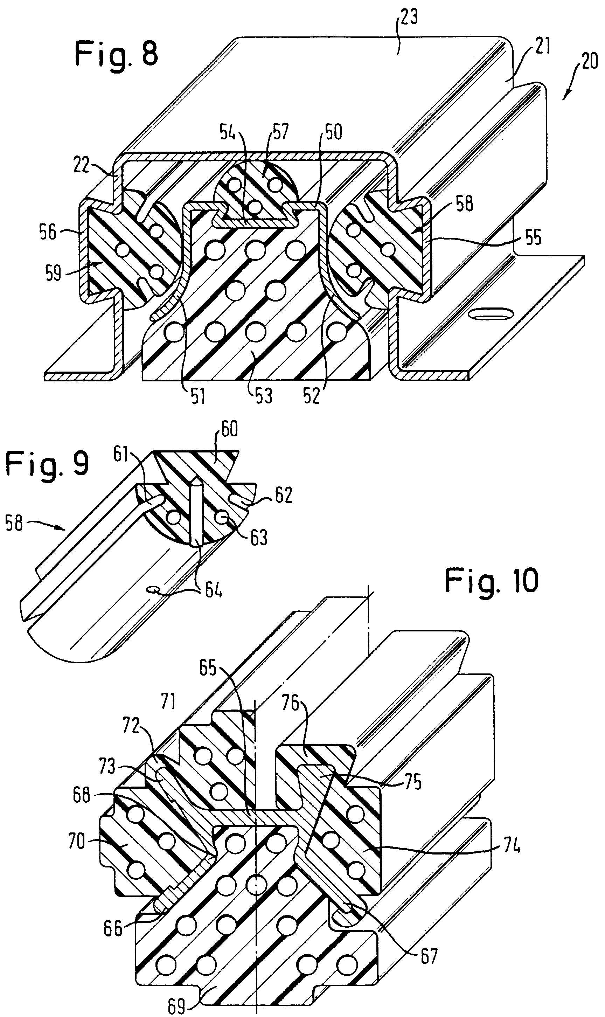

Bei dem in Fig. 8 dargestellten Ausführungsbeispiel weist der Mittelsteg 50 des Tragarmes lediglich zwei schräg nach unten gerichtete seitliche Stege 51 und 52 auf, die den Gummi-Tragkörper 53 umschließen. Dabei ist der Mittelsteg 50 mit einer längsverlaufenden, schwalbenschwanzförmigen Einziehung 54 versehen. Auch die beiden Seitenwände 21 und 22 des Gehäuses 20 weisen entsprechende schwalbenschwanzförmige Auswölbungen 55 und 56 auf.

In diese schwalbenschwanzförmige Einziehung 54 bzw. die entsprechenden Auswölbungen 55 und 56 sind nunmehr gleichartig ausgebildete Gummikörper 57, 58 und 59 eingesetzt, die in perspektivischer Ansicht nochmals gesondert in Fig. 9 dargestellt sind. Ein solcher Gummikörper 57 weist dabei einen etwa halbkreisförmigen Querschnitt mit einem auf der flachen Seite mittig angesetzten Schwalbenschwanzfuß 60 auf und ist seitlich mit entsprechenden Einziehungen 61 und 62 sowie dazwischenliegenden Längskanälen 63 versehen. Gleichzeitig ist es aber auch möglich, zur Steifigkeitseinstellung vertikal verlaufende Hohlkanäle 64 vorzusehen.

Die so gestalteten Gummikörper 57, 58 und 59, die ebenfalls aus einem extrudierten Strangprofil entsprechend der gewünschten Länge abgeschnitten sind, werden einfach in die schwalbenschwanzförmigen Nuten 54, 55 und 56 eingeklipst und bilden damit die seitlichen Horizontalanschläge gegenüber den Stegen 51 und 52 sowie den Vertikalanschlag gegen die Oberseite 23 des Gehäuses 20.

In Fig. 10 sind in der linken und rechten Hälfte zwei mögliche weitere Ausgestaltungen dargestellt. Zunächst ist beiden gemeinsam, daß die vom Mittelsteg 65 des Tragarms nach unten abragenden Stege 66 und 67 zunächst schräg nach innen und dann schräg nach außen verlaufen, um damit eine Hinterschneidung 68 für den von unten einzusetzenden Gummi-Tragkörper 69 zu bilden und diesem damit einen stabileren Sitz zu gewährleisten.

Wie man aus der linken Hälfte der Zeichnung ersieht, ist der seitliche Horizontalanschlag 70 mit dem oberen Vertikalanschlag 71 über einen Materialsteg 72 verbunden, der den schräg nach oben abragenden Steg 73 des Tragarmes umschließt. In gleicher Weise kann der nicht näher dargestellte rechte Horizontalanschlag mit dem Vertikalanschlag 71 verbunden werden, so daß alle drei Anschläge als einstückiges extrudiertes Längsprofil hergestellt werden können und dann über die beiden nach oben abragenden Stege auf den Tragarm aufgeklipst werden.

Eine weitere Variante ist in der rechten Hälfte der Fig. 10 dargestellt. Dabei weist der rechte Horizontalanschlag 74 einen den schräg nach oben abragenden Steg 75 allseitig umfassenden Ansatz 76 auf, der durch seine verdickte Ausgestaltung damit die Funktion des Vertikalanschlages übernimmt, so daß hiermit für die beiden Seitenanschläge und den Vertikalanschlag insgesamt nur zwei Bauteile erforderlich sind.

Insgesamt ergibt sich somit ein elastisches Lager zur Motorabstützung, bei dem der eigentliche Gummi-Tragkörper und die Anschläge aus einem Strangprofil hergestellt werden können und in den eigentlichen Tragarm nur eingeklipst sind, so daß damit das Lager insgesamt recyclingfähig ist. Durch unterschiedliche Durchdringungen und Hohlkanäle für den Gummi-Tragkörper und die Anschläge ist damit auch eine optimale Spannungsverteilung und leichte Einstellung der gewünschten Federkennlinie möglich.

## Patentansprüche

1. Elastisches Lager, insbesondere zur Abstützung von Antriebsaggregaten in Kraftfahrzeugen, mit einem vom Antriebsaggregat seitlich abragenden Tragarm, der sich über Elastomerkörper an einem starren Widerlager abstützt, dadurch gekennzeichnet, daß der Tragarm (1) angenähert kreuzförmigen Querschnitt mit seitlich schräg abragenden Stegen (4-7; 51, 52; 66, 67; 73, 74) aufweist, daß zwischen den Stegen längliche und prismatischen Querschnitt aufweisende und von einem fortlaufenden Extrudat abgeschnittene Gummikörper (10, 13-15; 31, 33, 34, 41; 45-48; 56-58; 69-71; 74) zur vertikalen und horizontalen Abstützung eingesetzt sind, die von einem motorseitig hin offenen und am Widerlager (25) befestigten Gehäuse (20) umschlossen sind.

2. Elastisches Lager nach Anspruch 1, dadurch gekennzeichnet, daß die Gummikörper durchgehende Längskanäle (11, 12; 63) aufweisen.

3. Elastisches Lager nach Anspruch 2, dadurch gekennzeichnet, daß die Längskanäle (11, 12) kreisförmigen Querschnitt mit über ihre Länge mindestens einer venturiartigen Verengung aufweisen.

4. Elastisches Lager nach Anspruch 2 oder 3, dadurch gekennzeichnet, daß die Längskanäle (11, 12) unterschiedlichen Durchmesser aufweisen.

5. Elastisches Lager nach Anspruch 1, dadurch gekennzeichnet, daß der Tragarm (1) einen horizontalen Mittelsteg (3) mit seitlich und unter einem Winkel von 30° bis 60° zur Horizontalen schräg nach oben und unten abragenden Stegen (4-7) aufweist, und daß der Mittelsteg (3) an einem Ende in einen breiteren Halteflansch (2) zum Anschluß des Motors übergeht.

6. Elastisches Lager nach einem oder mehreren der Ansprüche 1 bis 5, dadurch gekennzeichnet, daß der Tragarm (1) auf einem sich unmittelbar am Widerlager (25) abstützenden Gummi-Tragkörper (10; 31; 48; 53; 69) mit rechteckigem Querschnitt und einer keilförmig zulaufenden, zwischen den seitlich nach unten abragenden Stegen (5, 6; 51, 52; 66, 67) eingesetzten Oberseite aufliegt.

7. Elastisches Lager nach Anspruch 6, dadurch gekennzeichnet, daß der Gummi-Tragkörper (31) eine zentrale, vertikale Ausnehmung (32) rechteckigen oder kreisförmigen Querschnittes aufweist.

8. Elastisches Lager nach einem oder mehreren der Ansprüche 1 bis 5, dadurch gekennzeichnet, daß die beiden seitlichen Gummikörper (13, 14) als Horizontalanschläge gleichen Querschnitt aufweisen und die schräg abragenden Stege (4, 5; 6, 7) seitlich überragen und mit seitlichen Ansätzen (17, 18) an den umschließenden Gehäuseseitenwandungen (21, 22) anliegen.

9. Elastisches Lager nach einem oder mehreren der Ansprüche 1 bis 5, dadurch gekennzeichnet, daß der obere Gummikörper (15) als Vertikalanschlag ausgebildet ist und die schräg nach oben abragenden Stege (4, 7) mit mindestens einem Ansatz (19) überragt.

10. Elastisches Lager nach Anspruch 1 bis 5, dadurch gekennzeichnet, daß die jeweils einander gegenüberliegenden Gummikörper (45, 46; 47, 48) den gleichen Querschnitt aufweisen und spiegelsymmetrisch zueinander eingesetzt sind.

11. Elastisches Lager nach Anspruch 8 und 9, dadurch gekennzeichnet, daß die beiden seitlichen Gummikörper (70) und der obere Gummikörper (71) über einen die schräg nach oben abragenden Stege (73) umfassenden Materialbereich (72) miteinander verbunden und als einstückiges Strangprofil hergestellt sind.

12. Elastisches Lager nach Anspruch 8, dadurch gekennzeichnet, daß die beiden seitlichen Gummikörper (74) je einen, den schräg nach oben ragenden Steg (75) umfassenden Ansatz (76) als Vertikalanschlag aufweisen.

13. Elastisches Lager nach Anspruch 5, dadurch gekennzeichnet, daß die beiden schräg nach unten abragenden Stege (66, 67) zunächst schräg nach innen und anschließend schräg nach außen gerichet sind und im oberen Bereich eine schwalbenschwanzförmige Einziehung (68) für den unteren Gummi-Tragkörper (69) bilden.

14. Elastisches Lager nach Anspruch 1, dadurch gekennzeichnet, daß der Tragarm (1) einen horizontalen Mittelsteg (50) mit einer sich längserstreckenden, schwalbenschwanzförmigen Einziehung (54) und zwei seitlich nach unten abragende Stege (51, 52) zum Einschluß des abstützenden Gummi-Tragkörpers (53) aufweist und daß das umschließende Gehäuse (20) an den Seitenwänden (21, 22) mit je einer schwalbenschwanzförmigen Auswölbung (55, 56) versehen ist und daß in die schwalbenschwanzförmige Einziehung (54) bzw. Auswölbungen (55, 56) identische Profilstränge (57, 58, 59) als Vertikalanschlag bzw. Horizontalanschläge eingesetzt sind.

15. Elastisches Lager nach Anspruch 14, dadurch gekennzeichnet, daß die Profilstränge (57, 58, 59) angenähert halbkreisförmigen Querschnitt mit durchgehenden Längskanälen (63) und seitlichen Einziehungen (61, 62) sowie einen mittigen Schwalbenschwanzfuß (60) aufweisen.

16. Elastisches Lager nach Anspruch 5, dadurch gekennzeichnet, daß die seitlich schräg abragenden Stege (4-7) längsverlaufende, angenähert pfeilförmig zulaufende Ansätze (8) aufweisen, die in entsprechende Hinterschneidungen (9) der Gummikörper (10; 13-15) eingreifen.

17. Elastisches Lager nach Anspruch 16, dadurch gekennzeichnet, daß die Gummikörper (10; 13-15) zwischen den abragenden Stegen (4-7) eingeklipst sind.

18. Elastisches Lager nach einem oder mehreren der Ansprüche 1 bis 5, dadurch gekennzeichnet, daß die Gummikörper zwischen den Stegen gehaftet sind.

19. Elastisches Lager nach Anspruch 5, dadurch gekennzeichnet, daß der Tragarm (1) zwischen den beiden schräg nach oben abragenden Stegen (4, 7) eine querverlaufende Zwischenwandung (30) aufweist, die bündig mit der Oberkante der Stege (4, 7) abschließt.

20. Verfahren zur Herstellung von elastischen Gummikörpern für ein elastisches Lager zur Abstützung von Antriebsaggregaten, dadurch gekennzeichnet, daß die Gummikörper mit vorgegebenem Querschnitt als fortlaufende Profilstränge aus einem Elastomer extrudiert, ausvulkanisiert und anschließend auf vorgegebene Länge der einzelnen Gummikörper abgetrennt werden.
